# FASCICULE DE BREVET EUROPEEN

(11) **EP 3 700 876 B1**
(45) Date de publication et mention de la délivrance du brevet: **26.01.2022**
(21) Numéro de dépôt: 18833262.1
(22) Date de dépôt: 27.11.2018
(51) Int. Cl.: C04B 35/565, C04B 35/571, C04B 35/573, C04B 35/58

(54) **MATÉRIAU CÉRAMIQUE COMPOSITE PARTICULAIRE, PIÈCE LE COMPRENANT, ET PROCÉDÉ DE PRÉPARATION DE CETTE PIÈCE.**
TEILCHENFÖRMIGES KERAMISCHES VERBUNDMATERIAL, TEIL DAMIT UND VERFAHREN ZUR HERSTELLUNG DIESES TEILS
PARTICULATE CERAMIC COMPOSITE MATERIAL, PART COMPRISING THE SAME, AND METHOD FOR THE PRODUCTION OF SAID PART

(30) Priorité: 29.11.2017 FR 1761375
(43) Date de publication de la demande: 02.09.2020
(73) Titulaire: Commissariat à l'énergie atomique et aux énergies alternatives, 75015 Paris (FR)
(72) Inventeur: DAVID, Patrick, 37540 Saint-Cyr-Sur-Loire (FR); PIQUERO, Thierry, 37230 Fondettes (FR); MARTEGOUTTE, Julien, 59195 Herin (FR); SCHUSTER, Frédéric, 78100 Saint-Germain-En-Laye (FR)
(74) Mandataire: Brevalex
(86) Numéro de dépôt international: PCT/FR2018/052999
(87) Numéro de publication internationale: WO 2019/106282

(56) Documents cités:
- JP-A- 2003 238 249
- US-A1- 2003 162 647

## Description

### DOMAINE TECHNIQUE

La présente invention a trait à de nouveaux matériaux céramiques qui peuvent être classés dans les matériaux céramiques composites particulaires.

L'invention concerne, en outre, une pièce comprenant, de préférence constituée par un tel matériau céramique composite particulaire.

L'invention a enfin trait à un procédé de préparation de cette pièce.

Par matériau céramique composite particulaire, on entend généralement un matériau qui comprend une matrice en céramique au sein de laquelle se trouvent des particules en céramique.

Plus précisément, la présente invention concerne des matériaux composites comprenant des particules d'au moins une céramique choisie parmi les céramiques ultraréfractaires (« *UHTC* » ou « *Ultra High Temperature Ceramics* » en anglais) et une matrice en au moins une céramique également choisie parmi les céramiques ultraréfractaires.

Ladite céramique ultraréfractaire peut être en particulier le carbure de silicium (SiC).

### ÉTAT DE LA TECHNIQUE ANTÉRIEURE

Le SiC et les autres céramiques ultraréfractaires « *UHTC »* constitués par des borures, carbures, et nitrures à haut point de fusion ou de décomposition sont des composés qui possèdent de nombreuses propriétés intéressantes, en particulier d'excellentes propriétés mécaniques, thermiques ou chimiques, notamment jusqu'à haute température, voire jusqu'à très haute température, à savoir jusqu'à une température supérieure ou égale à 2000°C [1].

Par exemple, le SiC possède d'excellentes propriétés mécaniques, thermiques ou chimiques, jusqu'à 1500°C ou même 1600°C.

Ces propriétés peuvent varier fortement et sont indissociables des procédés et des conditions utilisées pour préparer ces composés.

Ces composés peuvent être utilisés comme composés purs ou en compositions complexes [2] et possèdent des applications dans des environnements extrêmes tels que la protection thermique, la propulsion, les éléments de fours, les creusets réfractaires, les composants structuraux pour futurs réacteurs nucléaires [3], ou encore les échangeurs thermiques tels que les récepteurs solaires [4].

Il existe de nombreux types de SiC monolithiques, présentant des différences, entre autres, de structures et microstructures et possédant des propriétés différentes. Ils sont en général dénommés en fonction de leurs procédés d'élaboration.

Ainsi, on connaît le SiC obtenu par frittage sans pression (« *Pressureless Sintering* » en anglais), le SiC obtenu sous haute pression à chaud (« *HIP »* ou « *Hot Isostatic Pressing* » en anglais ), le SiC obtenu par frittage flash (« *Spark Plasma Sintering* » ou « *SPS* »), le SiC obtenu par frittage réactif (« *reactive sintering* » en anglais), le SiC obtenu par réaction entre du carbone solide et du silicium fondu (SiC dit « *reaction bonded* » en anglais), le SiC obtenu par décomposition de polymères pré-céramiques (SiC dit « *PDC's* » ou « *Polymer Derived Ceramics* » en anglais), le SIC obtenu par imprégnation-pyrolyse de polymères (« *PIP»* ou *« Polymer impregnation Pyrolysis* » en anglais), le SiC « *CVD* » obtenu par Dépôt chimique en Phase Vapeur (« *Chemical Vapour Deposition* » ou « *CVD* » en anglais), et le SiC « *CVI* » obtenu, pour densifier des composites, par infiltration chimique en phase vapeur (« *Chemical Vapour Infiltration* » ou « *CVI* » en anglais).

Les autres composés « *UHTC* » peuvent, en général, être obtenus par les mêmes voies que le SiC et possèdent, comme lui, des propriétés qui dépendent des modes d'élaboration.

Le procédé de frittage sans pression (« *Pressureless Sintering* ») est le procédé le plus simple mais nécessite des ajouts de frittage (en général des oxydes réfractaires, par exemple Al₂0₃) permettant la formation d'un eutectique liquide et la densification par frittage, le SiC pur ne frittant pas seul. Les températures nécessaires sont élevées, 1800°C à 2100°C. Le même principe peut être appliqué à la préparation de composites particulaires en céramiques *« UHTC »,* avec des températures également élevées, 1650-2200°C, en fonction des compositions [3]. Les ajouts sont en général néfastes pour les propriétés des matériaux. Avec le procédé de frittage sans pression, des pièces peuvent être obtenues qui ont des côtes plus proches de celles visées que les pièces obtenues avec le procédé « *HIP* » ou le procédé « *Spark Plasma Sintering* » [5].

Le procédé *« HIP »,* consiste à enfermer la poudre, sous vide, dans un conteneur métallique, puis à appliquer une température et une pression élevées, typiquement 1850°C et 2000 bars [3]. Cette voie requiert un équipement très coûteux et nécessite en général un usinage des pièces, compte tenu de retraits pas tout à fait isotropes. Les densités obtenues peuvent être très proches de la densité théorique, pour le SiC pur [3], ou moindre, pour les autres céramiques « *UHTC* », en fonction des compositions et des conditions de température et de pression [2]. Les matériaux obtenus peuvent posséder d'excellentes propriétés mécaniques.

Le procédé *« SPS »* est similaire au procédé *« HIP »,* avec des pressions et des températures très élevées, mais avec un chauffage par un champ électrique à haute intensité traversant la pièce à densifier. Ce procédé est applicable aussi bien au SiC [3] qu'aux céramiques « *UHTC* » [2]. La durée très courte, typiquement quelques minutes, de ce procédé permet d'éviter une croissance des grains et permet ainsi d'obtenir des matériaux possédant d'excellentes propriétés mécaniques [6].

Les procédés de frittage réactif (« *Reactive Sintering* ») peuvent être classés en deux catégories, à savoir les procédés dits de « *Reactive Hot Processing » (« RHP* ») et les procédés dits de « *Reactive Spark Plasma Sintering » (« RSPS* ») [2]. Ces procédés consistent à densifier, par « *HIP* » ou par « *SPS* », des pièces qui contiennent, avant traitement, c'est-à-dire à l'état cru, des éléments qui vont réagir chimiquement entre eux à haute température. Ces éléments sont en général des métaux, tels que Zr, ou des métalloïdes, tels que Si, ou encore B₄C. Ainsi, les éléments Zr, Si et B₄C vont donner par réaction le composite particulaire ZrB₂-SiC-ZrC.

Les procédés réactifs impliquant un métal fondu (« *reaction bonded », « Liquid sintering* », ou « *MI » « Melt Infiltration* ») [6] [2] [3] [7] consistent à faire réagir un métal ou métalloïde fondu, (par exemple le silicium, à une température supérieure à 1400°C) avec du C, éventuellement en présence d'autres composés de type « *UHTC* ». Le métal ou métalloïde réagit avec le carbone pour donner un carbure. Il se produit des réactions complexes notamment de dissolution, précipitation, et frittage [3]. Cette technique est relativement simple mais conduit quasi systématiquement à la présence de métal ou de métalloïde libre rendant le matériau plus sensible à l'oxydation, ou possédant des propriétés mécaniques dégradées, en particulier à température élevée [7].

Le procédé « *PDC »* [8] consiste à pyrolyser des polymères précurseurs de la céramique que l'on souhaite obtenir. Ainsi, si l'on souhaite préparer du SiC, on utilisera un polycarbosilane en tant que polymère précurseur. Ce procédé donne d'excellents résultats pour la synthèse de fibres céramiques. Mais il est difficile avec ce procédé d'obtenir des pièces monolithiques. En outre, les pièces obtenues possèdent des densités relativement faibles et des propriétés mécaniques médiocres [8] [6].

Le procédé « *PIP* » est dérivé du procédé « *PDC* », précédemment décrit, transposé à la réalisation de matériaux composites à renforts fibreux. Il est nécessaire de réaliser plusieurs cycles d'imprégnation-pyrolyse de polymères, en raison de rendements de densification assez faibles. Le rendement peut cependant être amélioré en mélangeant avec le polymère des poudres nanométriques du composé à densifier. Ce procédé est néanmoins long, coûteux et les porosités résiduelles des matériaux obtenus sont assez élevées [9].

Le procédé de dépôt chimique en phase vapeur « *CVD* » permet notamment d'obtenir des dépôts de SiC, par décomposition de précurseurs gazeux tels que le méthyl-trichlorosilane (MTS, CH₃SiCl₃), dilués dans l'hydrogène, entre 900°C et 1400°C, à basse pression. Le matériau obtenu est homogène et possède de bonnes propriétés mécaniques. Les applications sont généralement limitées à des revêtements ou à des pièces de faible épaisseur [10].

Le procédé de « *CVI* » [9] est un procédé voisin du procédé de « *CVD* », où les dépôts sont effectués à l'intérieur d'un substrat, en général fibreux, et non sur le substrat, comme c'est le cas pour le procédé de « *CVD* », afin d'obtenir des matériaux composites céramiques.

Le principal avantage du procédé de « *CVI* » est la température relativement basse, compatible avec les fibres céramiques, avec lesquelles il est mis en oeuvre. D'autres avantages de ce procédé sont l'absence de silicium libre, et la possibilité de réaliser des pièces complexes. L'inconvénient principal de ce procédé est la faible vitesse de densification. La vitesse de densification peut être augmentée en opérant avec un gradient de pression, ce qui permet d'obtenir la densification de pièces de 5 mm en 5 jours. Cette durée demeure néanmoins encore relativement longue [9]. Une autre manière de diminuer les durées de densification, est le couplage du procédé de « *CVI* » avec le procédé « *PIP* », avant ou après le procédé de « *CVI* » [9]. L'ajout de poudres lors du procédé « *PIP »* a aussi été étudié et permet de réduire les fissures inhérentes au procédé « *PIP ».*

Même avec un nombre de cycles « *PIP »* qui peut être important, pouvant aller par exemple de 7 à 14, la densité finale reste modérée (2,3 à 2,6) [11].

Afin de remédier au problème de lenteur de densification et d'homogénéité du matériau, un procédé de « CVI » modifiée, « réactive », a été proposé [7]. Dans ce procédé modifié, on imprègne dans la préforme, par « *PIP »,* des particules comportant une phase carbonée ou carbure, qui réagit ensuite avec la phase gazeuse. L'épaisseur de réaction est homogène, mais néanmoins très faible, de l'ordre de la centaine de nm, pour des particules de 600 nm, après 20 h de réaction, à 950°C, pour une pièce de seulement 0,6 mm d'épaisseur. Dans le document [7], il est également indiqué que le procédé de « *CVI* » classique, sur des poudres de C, même à de faibles cinétiques ( par exemple 300 nm/h), cependant plus élevées que dans le procédé de « *CVI* » réactive), conduit à des bouchages externes et à des gradients d'épaisseurs de dépôt.

Par ailleurs, le document JP-A-2003-238249 [12] décrit, selon la revendication 1, et l' « Abstract », un matériau vitrocéramique qui comprend de 10% à 70% en masse de particules céramiques en une céramique cristallisée, d'un diamètre moyen de 3 micromètres ou plus.

Ces particules céramiques cristallisées sont dispersées dans une matrice qui comprend une phase amorphe et une phase cristalline.

Les particules cristallisées dispersées peuvent être en SiC mais la matrice est exclusivement un mélange d'oxydes qui donne une phase amorphe, et une phase cristallisée (par précipitation dans la phase amorphe).

Il semblerait que la phase amorphe forme une couche qui recouvre au moins en partie la surface externe des particules.

Cette couche de phase amorphe n'est pas poreuse.

En outre , la revendication 2 de ce document indique que l'épaisseur de la phase amorphe est inférieure ou égale à 500 nm ce qui est très inférieur à l'épaisseur de 1000 à 10.000 nm (1 à 10 microns) qui est l'épaisseur préférée de la couche poreuse en au moins une deuxième céramique ultraréfractaire sous forme amorphe du matériau selon l'invention.

Le document US-A1-2003/162647 [13] décrit, selon la revendication 1, un matériau constitué par une céramique composite à fibres comportant :
- un tissu ou amas (« *cluster* ») dense de fibres orientées tridimensionnellement avec une conductivité thermique élevée.
- une matrice cristalline de SiC-β qui est créée par un procédé de CVI essentiellement sur les fibres.
- un composant matriciel de SiC- β, qui est créé dans les pores de la structure du tissu ou de l'amas par un procédé d'infiltration et de pyrolyse d'un polymère, à partir d'une suspension d'une poudre de carbure de silicium dans un polymère, et
- un autre composant matriciel en SiC- β qui est créé par un procédé de CVI dans les fissures et les pores du matériau, du fait du procédé de pyrolyse précédent.

Les matériaux et le procédé de mise en oeuvre concernés par ce document reposent sur l'emploi de structures fibreuses denses, et sont, par cela, très différents des matériaux composites particulaires qui font l'objet de la présente invention. Le procédé de mise en oeuvre ne comporte pas non plus d'étape de génération de porosité par l'emploi de porogènes pour faciliter l'accès de gaz pour la densification CVI.

Il ressort de ce qui précède que les matériaux céramique composite particulaires connus obtenus par les procédés connus ne sont pas satisfaisants, présentent de nombreux inconvénients et des propriétés notamment thermiques et mécaniques insuffisantes.

De même, les procédés connus de préparation de matériaux céramique ne sont pas satisfaisants, présentent de nombreux inconvénients notamment par l'emploi de températures et de pressions élevées, ou conduisent, lorsque les températures de synthèse sont plus faibles et sans pression, à des matériaux qui ne sont pas eux-mêmes satisfaisants notamment pour l'emploi à haute température, en raison de la présence d'ajouts de frittage.

### EXPOSÉ DE L'INVENTION

Ce but, et d'autres encore sont atteints, conformément à l'invention par un matériau céramique composite particulaire, comprenant, de préférence constitué par :
- des particules en au moins une première céramique ultraréfractaire « UHTC » sous forme cristallisée, la surface externe de ces particules étant recouverte au moins en partie par une couche poreuse en au moins une deuxième céramique ultraréfractaire sous forme amorphe, ladite première céramique ultraréfractaire « UHTC » sous forme cristallisée représentant de 25% à 90% en masse par rapport à la masse du matériau et ladite deuxième céramique ultraréfractaire sous forme amorphe représentant de 2 à 15% en masse par rapport à la masse totale du matériau; et les particules définissant entre elles un espace;
- éventuellement, des amas poreux de ladite au moins une deuxième céramique ultraréfractaire sous forme amorphe, répartis dans ledit espace ;
- une matrice dense en au moins une troisième céramique ultraréfractaire sous forme cristallisée remplissant au moins en partie ledit espace ;
- éventuellement, un revêtement dense en au moins ladite troisième céramique ultraréfractaire sous forme cristallisée, recouvrant la surface externe de ladite matrice, ladite matrice et ledit revêtement représentant de 5% à 90% en masse par rapport à la masse totale du matériau.

Le terme céramique, au sens de l'invention, recouvre aussi le carbone.

La porosité de la couche poreuse en au moins une deuxième céramique ultraréfractaire sous forme amorphe est de 15% à 30%, de préférence de 15% à 25%, de préférence encore de 15% à 20%. Cette porosité est généralement déterminée par pycnomètrie Hg ou He, et isothermes d'adsorption N₂ ou CO₂.

Par exemple, dans le cas où la deuxième céramique ultraréfractaire est du SiC issu d'un polymère polycarbosilane, la porosité de la couche poreuse en au moins une deuxième céramique ultraréfractaire sous forme amorphe peut être de 25%.

Dans le cas où la deuxième céramique ultraréfractaire est du SiC issu d'un polymère polycarbosilane, la densité de la couche poreuse en au moins une deuxième céramique ultraréfractaire sous forme amorphe peut être d'environ 2,4.

La taille des pores de la couche poreuse en au moins une deuxième céramique ultraréfractaire sous forme amorphe peut aller par exemple de un nanomètre à 10 µm. La taille des pores est généralement déterminée par pycnomètrie Hg ou He, et isothermes d'adsorption N₂ ou CO₂.

Avantageusement, la couche poreuse en au moins une deuxième céramique ultraréfractaire sous forme amorphe peut avoir une épaisseur de 1 à 10 microns.

L'épaisseur de la couche poreuse en au moins une deuxième céramique ultraréfractaire sous forme amorphe différencie aussi le matériau selon l'invention du matériau du document [12], car la revendication 2 de ce document indique que l'épaisseur de la phase amorphe est inférieure ou égale à 500 nm ce qui est très inférieur à l'épaisseur de 1000 à 10.000 nm (1 à 10 microns) qui est l'épaisseur préférée de la de la couche poreuse en au moins une deuxième céramique ultraréfractaire sous forme amorphe du matériau selon l'invention.

La porosité et la taille des pores des amas poreux de ladite au moins une deuxième céramique ultraréfractaire sous forme amorphe sont généralement analogues à la porosité et à la taille des pores de la couche poreuse en au moins une deuxième céramique ultraréfractaire sous forme amorphe.

La taille des amas de ladite au moins une deuxième céramique ultraréfractaire sous forme amorphe est généralement de 1 à 30 microns.

Par matrice dense, (revêtement dense), sans porosité, on entend que la densité de cette matrice (revêtement) est égale à ou est proche de la densité théorique, par exemple ne s'écarte pas de la densité théorique de plus de 5%.

La porosité globale du matériau céramique composite particulaire selon l'invention, c'est-à-dire la porosité du matériau céramique composite particulaire selon l'invention pris dans son ensemble peut être supérieure ou égale à 5%, de préférence de 5% à 50%, de préférence encore de 5% à 30%, mieux de 10% à 20%. Cette porosité globale est généralement déterminée par pycnomètrie Hg ou He, et isothermes d'adsorption N₂ ou CO₂.

La porosité globale du matériau céramique selon l'invention différencie aussi le matériau composite céramique selon l'invention du matériau du document [12] qui possède, selon la revendication 3 de ce document, une porosité ouverte de 1% ou moins.

La taille des pores du matériau céramique composite particulaire selon l'invention peut aller par exemple de un nanomètre à cent µm.

La taille des pores du matériau céramique composite particulaire selon l'invention est généralement déterminée par pycnomètrie Hg ou He, et isothermes d'adsorption N₂ ou CO₂.

Le matériau céramique composite particulaire selon l'invention peut présenter une seule ou plusieurs gammes de porosité.

Avantageusement, lesdites première, deuxième et troisième céramiques peuvent être choisies parmi les céramiques borures, les céramiques carbures, les céramiques nitrures, les céramiques siliciures, le carbone, et leurs mélanges.

De préférence, lesdites première, deuxième et troisième céramiques peuvent être choisies parmi le SiC, le MoSi₂, le TiC, le TaC, le ZrC, le ZrB₂, le HfC, le HfB₂, le BN, l'AIN, le TiN, le C, et leurs mélanges.

Eu égard au procédé de préparation décrit plus bas, les première et deuxième céramiques sont généralement choisies parmi les céramiques qui résistent à une attaque chimique telle qu'une attaque par un acide.

Avantageusement, lesdites première, deuxième et troisième céramiques peuvent être identiques.

De préférence, lesdites première, deuxième et troisième céramiques peuvent être toutes du SiC.

Dans ce cas, avantageusement, la première céramique ultraréfractaire peut être du SiC sous forme cristallisée a, la deuxième céramique peut être du SiC poreux amorphe, et la troisième céramique peut être du SiC sous forme cristallisée β.

Avantageusement, la matrice est préparée par un procédé d'Infiltration Chimique en Phase Vapeur (« *CVI »*)*.*

Avantageusement, les particules en au moins une première céramique ultraréfractaire « UHTC » sous forme cristallisée peuvent avoir une taille moyenne, définie par leur plus grande dimension, tel qu'un diamètre moyen, de 1 à 30 microns.

Avantageusement, la couche poreuse en au moins une deuxième céramique ultraréfractaire sous forme amorphe peut avoir une épaisseur de 1 à 10 microns.

Avantageusement, la matrice, par exemple en SiC, peut avoir une épaisseur de 0,5 à 10 microns.

Avantageusement, le revêtement en au moins ladite troisième céramique ultraréfractaire sous forme cristallisée, recouvrant la surface externe de ladite matrice peut avoir une épaisseur de 10 à 100 microns.

On peut considérer que le matériau selon l'invention comprend, de préférence est constitué par, des particules de SiC et/ou d'autres céramiques ultra réfractaires (« *UHTC »),* pourvues d'une couche poreuse, insérées dans une matrice de SiC et/ou d'autres céramiques ultra réfractaires *(« UHTC »),* cette matrice étant obtenue de préférence par Infiltration Chimique en Phase Vapeur (« *CVI).*

Le matériau selon l'invention possède ainsi une microstructure spécifique avec des particules, une couche sur chacune de ces particules, une matrice dans laquelle sont réparties ces particules, et enfin un revêtement sur ladite matrice.

En outre, les particules sont spécifiquement des particules de céramique cristallisée, la couche sur ces particules est spécifiquement une couche poreuse en une céramique amorphe, et enfin la matrice et le revêtement sont également spécifiquement en une céramique cristallisée.

Une telle structure ou microstructure n'a jamais été décrite ou suggérée dans l'art antérieur, tel qu'il est représenté notamment par les documents cités plus haut.

Le matériau selon l'invention est différent des matériaux céramiques composites particulaires classiques, puisque les particules, grains de céramique ne sont pas liés par un phénomène de diffusion se produisant lors d'un procédé de frittage simple, sous pression ou réactionnel, comme c'est le cas pour le SiC [3] ou d'autres céramiques ultraréfractaires *(« UHTC »)* [2].

Au contraire dans le matériau selon l'invention, les particules, chacune pourvue d'une couche poreuse sont réparties, insérées dans une matrice obtenue de préférence par infiltration chimique en Phase Vapeur « *CVI* ». On peut considérer ainsi que les particules sont liées par l'intermédiaire de cette matrice.

Le matériau selon l'invention n'est pas non plus un matériau de type « *CVD* », puisque dans ces matériaux obtenus par « *CVD* », il n'y a qu'un seul constituant continu qui est déposé sur un substrat, lequel est en général retiré après le dépôt [6].

Le matériau selon l'invention est également différent des matériaux décrits précédemment, obtenus par « *CVI* » ou par « *CVI* » réactive, car le matériau selon l'invention, comprend, de préférence est constitué par, des particules en au moins une première céramique ultraréfractaire « *UHTC* », telle que le SiC, sous forme cristallisée, la surface externe de chacune de ces particules étant recouverte au moins en partie par une couche poreuse en au moins une deuxième céramique ultraréfractaire, telle que le SiC, sous forme amorphe (généralement issue d'un polymère précurseur) ; une matrice en au moins une troisième céramique ultraréfractaire, telle que le SiC, sous forme cristallisée (généralement préparée par « *CVI* ») dans laquelle sont réparties lesdites particules ; et un revêtement en au moins ladite troisième céramique ultraréfractaire sous forme cristallisée, telle que le SiC, recouvrant la surface externe de ladite matrice.

Les phases amorphes, poreuses de la couche qui recouvrent les particules, et également la matrice dense, constituent des barrières de déviation des fissures et confèrent une bonne ténacité au matériau selon l'invention.

Il est à noter que, dans le matériau selon l'invention, la matrice dense en au moins une troisième céramique ultraréfractaire sous forme cristallisée remplit au moins en partie l'espace défini entre les particules. En d'autres termes, la matrice est dense et sans porosité, mais il n'y a généralement pas de matrice partout dans ledit espace, ledit espace n'est généralement pas totalement rempli par ladite matrice et des espaces vides demeurent dans ledit espace. Cela est dû au fait que ledit espace est peu accessible, par diffusion, aux espèces chimiques permettant le dépôt.

On peut dire que dans le matériau selon l'invention en plus des phases amorphes de la deuxième céramique et des particules, grains de la première céramique ultraréfractaire « UHTC » sous forme cristallisée, il existe une matrice dense en au moins une troisième céramique ultraréfractaire sous forme de dépôt dense (obtenu notamment par CVD et/ou CVI), par exemple de densité théorique.

Cette matrice dense peut former une continuité au-travers du matériau, peut former une phase continue dans tout le matériau.

Cette matrice dense en au moins une troisième céramique ultraréfractaire ne correspond pas à un matériau issu de poudres ni à des grains issus d'une cristallisation obtenue par précipitation.

Les proportions des différents constituants du matériau selon l'invention peuvent être ajustées en fonction des paramètres d'élaboration, dans les plages définies plus haut.

Le matériau selon l'invention possède une microstructure très stable jusqu'à une température élevée, voire très élevée, à savoir jusqu'à une température supérieure ou égale à 2000°C.

Par exemple, dans le cas où les première, deuxième et troisième céramiques sont du SiC, le matériau selon l'invention possède une microstructure très stable jusqu'à une température élevée, voire très élevée, à savoir jusqu'à une température supérieure ou égale à 1500°C ou 1600°C.

Cela est dû au fait qu'il n'y a pas de croissance des particules de la première céramique, telle que le SiC, car il n'y a pas, lors du procédé de préparation, d'addition de composés favorisant le frittage dits « ajouts de frittage ».

Cela est aussi dû au fait qu'il y a peu ou pas de contact entre les particules, car ces particules sont séparées les unes des autres par la couche poreuse en au moins une deuxième céramique ultraréfractaire, telle que le SiC, sous forme amorphe (généralement issue d'un polymère précurseur) et par la matrice en au moins une troisième céramique ultraréfractaire, telle que le SiC, sous forme cristallisée (généralement préparée par « *CVI »).*

La porosité globale du matériau selon l'invention, qui est, comme on le verra plus bas, liée au procédé d'élaboration (à savoir aux techniques mises en oeuvre dans les diverses étapes du procédé telles que la CVI, mais aussi les autres techniques) est ajustable, dans un domaine assez large, par exemple dans une plage de 5% à 50%, de préférence de 5% à 30%, de préférence encore de 10% à 20%. Cette porosité est généralement déterminée par pycnomètrie Hg ou He, et isothermes d'adsorption N₂ ou CO₂.

Cela peut présenter un intérêt pour des applications telles que des filtres ou de la catalyse.

Dans de telles applications, l'épaisseur globale du matériau selon l'invention est généralement de 100 microns à 5 mm

Si le matériau est sous la forme de structures alvéolaires, pour des applications d'échangeurs thermiques par exemple, les matériaux, tel que des parois ou les ligaments ont également des épaisseurs de 100 microns à 5 mm, mais l'épaisseur globale des matériaux selon l'invention peut aller jusqu'à plusieurs dizaines de centimètres. Par exemple, 10,20, 50 ou 100 cm.

Cependant, si l'on recherche des propriétés mécaniques élevées, il faut que le matériau selon l'invention contienne le plus de matrice possible, ce qui conduit à une porosité globale du matériau généralement inférieure ou égale à 20%, à savoir généralement de 10% à 20%.

Le coût de fabrication du matériau selon l'invention est modéré, car comme on le verra plus bas, il est généralement obtenu par un procédé à basse pression et température modérée.

Le matériau selon l'invention possède un bon comportement à température élevée, sans évolution néfaste de sa microstructure. Ce bon comportement à température élevée du matériau selon l'invention est dû notamment à sa composition, à l'absence d'ajouts de frittage, à l'absence de croissance des grains, particules et aux caractéristiques de la matrice.

Autrement dit, le matériau selon l'invention possède de bonnes caractéristiques mécaniques et thermiques, ainsi que des caractéristiques de porosité ajustables.

Par exemple, la porosité globale du matériau selon l'invention peut se situer dans les plages déjà précisées plus haut.

L'invention concerne, en outre, une pièce comprenant, de préférence constituée par, le matériau céramique composite particulaire selon l'invention tel qu'il a été décrit dans ce qui précède.

Les pièces peuvent être des pièces pour des applications telles que des filtres ou de la catalyse.

Dans de telles applications, l'épaisseur globale de la pièce selon l'invention est généralement de 100 microns à 5 mm

Si les pièces sont sous forme de structures alvéolaires, pour des applications d'échangeurs thermiques par exemple, les pièces, telles que des parois ou les ligaments ont également des épaisseurs de 100 microns à 5 mm, mais l'épaisseur globale des pièces selon l'invention peut aller jusqu'à plusieurs dizaines de centimètres. Par exemple, 10,20, 50 ou 100 cm.

L'invention a également trait au procédé de fabrication d'une pièce en un matériau céramique composite particulaire selon l'invention tel qu'il a été décrit dans ce qui précède.

Ce procédé comprend les étapes successives suivantes :
a) on prépare une pièce, dite pièce crue ou verte (« *green* »), comprenant un mélange d'une poudre de particules de la première céramique et d'une poudre de particules d'un matériau porogène réfractaire susceptible d'être éliminé par une attaque chimique, un polymère précurseur de la deuxième céramique, et un solvant dudit polymère ;
b) on évapore le solvant et on réticule le polymère précurseur de la deuxième céramique ;
c) on effectue un traitement thermique pour transformer le polymère en la deuxième céramique, qui se présente sous la forme d'une couche poreuse qui recouvre au moins en partie la surface externe des particules de la première céramique, et éventuellement d'amas poreux;
d) on élimine le matériau porogène réfractaire par une attaque chimique, moyennant quoi on obtient une pièce comprenant les particules de la première céramique, la deuxième céramique poreuse qui se présente sous la forme d'une couche poreuse qui recouvre au moins en partie la surface externe de ces particules et éventuellement d'amas poreux, et une porosité interne entre lesdites particules;
e) traitement de la pièce obtenue à l'issue de l'étape d) par une technique d'infiltration chimique en phase gazeuse (« CVI ») afin de déposer la troisième céramique dans la porosité interne de la pièce ;
f) éventuellement, dépôt de la troisième céramique sur la surface externe de la pièce obtenue à l'issue de l'étape e) par une technique de dépôt chimique en phase gazeuse (« CVD »).

Le procédé selon l'invention comprend une suite spécifique d'étapes spécifiques qui n'a jamais été décrite ou suggérée dans l'art antérieur.

Le procédé selon l'invention ne présente pas les inconvénients, défauts, limitations et désavantages des procédés de l'art antérieur, tels que les procédés décrits plus haut et il apporte une solution aux problèmes de ces procédés.

Le procédé selon l'invention consiste principalement, à réaliser lors de ses premières étapes a) à d) un matériau poreux avec les particules de base de la première céramique. Cette porosité permet ensuite de réaliser une infiltration de la matrice par un procédé de « *CVI* » et un dépôt de la troisième céramique, dans des conditions élevées de cinétique.

En d'autres termes, le procédé selon l'invention repose principalement sur la création d'une porosité, au sein d'une structure granulaire céramique, permettant ensuite un complément de densification céramique par voie gazeuse.

Le procédé selon l'invention se distingue fondamentalement des procédés de l'art antérieur tels que les procédés décrits plus haut.

En effet, les procédés de frittage sans pression « *Pressureless sintering », « HIP », « SPS* », ou de frittage réactif « *Reactive sintering* », précédemment présentés, sont basés sur un principe de densification, à savoir par frittage, entièrement différent de celui mis en oeuvre dans le procédé selon l'invention. Ces procédés, basés sur le frittage conduisent donc à des matériaux de microstructures totalement différentes du matériau revendiqué.

Il en est de même pour les procédés mettant en oeuvre un métal fondu réactif qui laissent du métal libre dans la structure obtenue.

Les procédés « *PDC »* et « *PIP* », qui utilisent des polymères, conduisent à des matériaux très poreux et fissurés, amorphes, à moins de les porter à très haute température.

Le procédé « *CVD* » conduit à un matériau avec une seule phase homogène, et n'est donc pas composite. Ce procédé nécessite, en outre, obligatoirement la présence d'un substrat qui doit être éliminé par la suite.

Les procédés « *CVI* » et « *CVI* » réactive, pour la densification de poreux contenant des poudres, conduisent à des épaisseurs très faibles de matrice et sont des procédés très lents.

Le procédé selon l'invention ne fait également appel à aucune précipitation et ne comprend aucune étape de précipitation, alors que, dans le document [13] le matériau est obtenu par des techniques de précipitation.

Le procédé selon l'invention et le matériau selon l'invention ne mettent généralement pas en oeuvre de fibres, au contraire du procédé du document [13]. Plus exactement, la poudre de particules de la première céramique et la poudre d'un matériau porogène réfractaire mises en oeuvre dans l'étape a) du procédé selon l'invention ne se présentent pas sous la forme de fibres, ne comprennent pas de fibres. Au contraire, le procédé du document [13] nécessite des fibres (étape a) du procédé du document [13]), la proportion de fibres étant d'au moins 35% en volume (revendication 5 du document [13]). Ensuite du SiC est déposé, essentiellement sur les fibres, par un procédé de CVI.

Le procédé selon l'invention ne fait appel à aucun frittage et ne comprend aucune étape de frittage alors que dans le document [13] le matériau est obtenu par des techniques de frittage.

Le procédé selon l'invention met généralement en oeuvre des températures inférieures à 1600°C ou 1500°C, et sans ajout de frittage, alors que SiC fritte sans ajout, à des températures bien supérieures.

La poudre de particules de la première céramique et la poudre de particules d'un matériau porogène réfractaire peuvent comprendre des particules ayant toute forme autre que la forme de fibres, par exemple des particules sous la forme de sphères ou de sphéroïdes ou encore de polyèdres et non de fibres.Le procédé selon l'invention remédie aux défauts des procédés de l'art antérieur, il permet une densification rapide et homogène, sans retrait, à température modérée et sans pression, de céramiques telles que le SiC.

Le procédé selon l'invention présente, entre autres, les avantages suivants par rapport aux procédés de l'art antérieur :
- il est peu coûteux car il ne met pas en oeuvre de pressions élevées et il utilise des températures relativement modestes. Ainsi, généralement, comme on l'a déjà mentionné plus haut, le procédé selon l'invention met en oeuvre des températures inférieures à 1600°C ou 1500°C ;
- il est rapide pour des épaisseurs pouvant aller jusqu'à plusieurs mm ;
- le matériau des pièces obtenues est d'une pureté élevée ;
- il n'y a quasiment aucune limitation sur la forme, géométrie, et la taille des pièces qui peuvent être préparées par le procédé selon l'invention. Le procédé selon l'invention permet la préparation de pièces de géométries complexes voire très complexes et/ou de grandes tailles ;
- le procédé selon l'invention permet de réaliser des pièces, même des pièces de formes complexes, avec une bonne maîtrise dimensionnelle, sans nécessité d'usinage.

En résumé, le procédé selon l'invention présente l'avantage de conduire à des pièces avec une porosité contrôlable, réalisées sans ajout de frittage, à basse pression et température modérée, et qui possèdent une très bonne stabilité à température élevée et de bonnes propriétés mécaniques et thermiques.

Le procédé selon l'invention possède notamment la particularité de conduire à un matériau dans lequel sont associés trois types de microstructures différentes.

Ces trois microstructures sont liées à la création d'un chemin de porosité ouverte qui permet une infiltration chimique en phase gazeuse et qui laisse subsister une porosité résiduelle, par exemple au maximum de 20%.

La préparation de la pièce crue ou verte lors de l'étape a) comprend généralement une étape de préparation du mélange d'une poudre de particules de la première céramique et d'une poudre de particules du matériau porogène réfractaire susceptible d'être éliminé par une attaque chimique ; et une étape de mise en forme du mélange d'une poudre de particules de la première céramique, et d'une poudre de particules du matériau porogène réfractaire susceptible d'être éliminé, par exemple décomposé, par une attaque chimique, sous la forme de la pièce crue ou verte.

La première céramique a déjà été décrite plus haut.

Par matériau porogène, on entend un matériau qui lors de son élimination permet la création d'une porosité au sein de la pièce.

En effet, la poudre de matériau porogène réfractaire, telle qu'une poudre de plâtre sera par la suite éliminée (lors de l'étape d) du procédé) pour générer alors une porosité dans la pièce. Dans cette porosité, la troisième céramique pourra être déposée par une technique d'infiltration chimique en phase vapeur « CVI » avec une cinétique pouvant être élevée.

On ne recherche pas une densité élevée de la pièce crue, verte. Le matériau porogène réfractaire tel que le plâtre, a pour rôle de créer, une fois qu'il aura été éliminé, un chemin d'accès à l'ensemble des porosités du matériau (sauf la microporosité de la couche), pour permettre une densification par voie gazeuse avec des cinétiques élevées.

Le matériau porogène est un matériau réfractaire.

Par matériau réfractaire, on entend un matériau capable de supporter sans dégradation les températures mises en oeuvre lors des étapes ultérieures du procédé, notamment lors de l'étape c).

Généralement, le matériau porogène réfractaire est choisi parmi les matériaux capables de supporter une température supérieure à 300°C, de préférence supérieure à 400°C, de préférence encore supérieure à 600°C, mieux supérieure à 800°C, mieux encore supérieure à 1000°C.

Par matériau susceptible d'être éliminé par une attaque chimique, on entend, généralement un matériau qui peut être décomposé, sous l'action d'un composé chimique tel qu'une base ou un acide.

Avantageusement, le matériau porogène réfractaire est choisi parmi le plâtre, le carbonate de potassium, le carbonate de calcium, et le sulfate de potassium (K₂SO₄).

La préparation du mélange de la poudre de particules de la première céramique, et de la poudre de particules du matériau porogène réfractaire susceptible d'être éliminé par une attaque chimique peut être réalisée par voie sèche (à sec) ou par voie humide.

La mise en forme du mélange d'une poudre de particules de la première céramique, et d'une poudre de particules du matériau porogène réfractaire susceptible d'être éliminé par une attaque chimique peut être réalisée par une technique classique, tel que le moulage ou le coulage en barbotine, ou avec un filtre-presse.

Ou bien la mise forme peut être réalisée par une technique moins classique, telle qu'une technique de fabrication additive, par exemple une technique de projection de liant sur un lit de poudre en utilisant un mélange d'une poudre de particules de la première céramique, telle que du SiC, et d'une poudre d'un matériau porogène réfractaire.

Avantageusement, la poudre de particules de la première céramique et/ou la poudre de particules du matériau porogène réfractaire susceptible d'être éliminé par une attaque chimique sont des poudres que l'on peut qualifier de grandes dimensions, c'est-à-dire des poudres dont la dimension moyenne (par exemple le diamètre) des particules est généralement supérieure ou égale à 10 microns.

Un matériau porogène présentant une telle dimension de particules est plus facilement éliminé par une attaque chimique.

L'ajout du polymère précurseur (aussi appelé polymère précéramique) de la deuxième céramique, généralement dilué dans un solvant, afin de favoriser l'imprégnation, peut être réalisé lors de l'étape de préparation du mélange, notamment par voie humide, d'une poudre de particules de la première céramique, et d'une poudre de particules du matériau porogène réfractaire susceptible d'être éliminé par une attaque chimique.

Le solvant est généralement un solvant organique qui peut être choisi, notamment pour ce qui concerne les polymères polycarbosilanes (précurseurs de SiC) parmi le toluène l'hexane, le tétrahydrofuranne, le cyclohexane, le xylène, et leurs mélanges.

Ou bien, l'ajout du polymère précurseur de la deuxième céramique peut être réalisé lors de l'étape de mise en forme du mélange d'une poudre de particules de la première céramique, et d'une poudre de particules du matériau porogène réfractaire susceptible d'être éliminé par une attaque chimique.

Ou bien encore, l'ajout du polymère précurseur de la deuxième céramique peut être réalisé après l'étape de mise en forme du mélange d'une poudre de particules de la première céramique, et d'une poudre de particules du matériau porogène réfractaire susceptible d'être éliminé par une attaque chimique, sous la forme d'une pièce crue ou verte.

De préférence, cet ajout est réalisé par trempage de la pièce crue ou verte dans une solution du polymère, de préférence encore sous dépression.

La quantité de polymère employée est plus faible que dans les procédés classiques utilisant des polymères (procédés *« PDP »* ou *« PIP* ») puisque le principal objectif est simplement de permettre une pré-consolidation des pièces suffisante pour permettre leur manipulations lors des différentes étapes suivantes du procédé.

A titre d'exemple, la pièce crue ou verte peut comprendre de 30 à 80% en masse de poudre de la première céramique, telle que du SiC, de 17 à 67% en masse de matériau porogène réfractaire, tel que du plâtre, et de 3% à 25% en masse de polymère (il s'agit de la masse de polymère pur, hors solvant, sachant que le polymère peut être dilué jusqu'à un facteur 20 dans un solvant). De telles proportions en masse permettent avantageusement d'obtenir à la fois une bonne infiltrabilité dans le procédé de CVI et de donner de bonnes propriétés mécaniques au matériau, à la pièce.

A titre de comparaison, la quantité de polymère utilisée dans les procédés classiques est généralement de 30% à 50% en masse.

Avantageusement, le polymère précurseur (polymère précéramique) de la deuxième céramique peut être choisi parmi les polycarbosilanes, les polysilazanes, les polyborosilanes et leurs mélanges.

Lors de l'étape b) du procédé selon l'invention, on évapore le solvant et on réticule le polymère précurseur de la deuxième céramique.

Cette étape est généralement réalisée en chauffant la pièce crue, verte, par exemple en traitant la pièce crue, verte, à l'étuve sous gaz neutre pour évaporer le solvant et réticuler le polymère.

Lors de l'étape c) du procédé selon l'invention, on effectue un traitement thermique pour transformer le polymère en la deuxième céramique poreuse qui se présente sous la forme d'une couche poreuse qui recouvre au moins en partie la surface externe de chacune des particules de la première céramique, et éventuellement d'amas poreux.

La deuxième céramique, issue du polymère, étant poreuse ou se présentant sous forme d'amas, cela favorise l'accès du réactif d'attaque chimique, tel qu'un acide, au matériau porogène tel que le plâtre afin d'éliminer celui-ci lors de l'étape suivante.

Ce traitement thermique est généralement réalisé à une température de 600°C à 1600°C, de préférence de 800°C à 1500°C, de préférence encore de 1000°C à 1200°C.

La deuxième céramique est sous forme amorphe.

On peut dire que le traitement thermique pour transformer le polymère en la deuxième céramique poreuse est une pyrolyse et que donc la phase amorphe de la deuxième céramique est issue de la pyrolyse d'un polymère ce qui n'est absolument pas le cas dans le document [13].

Les étapes b) et c) du procédé peuvent être regroupées et constituer une seule étape, au cours de laquelle on effectue un traitement thermique en augmentant progressivement la température pour tout d'abord évaporer le solvant et réticuler le polymère précurseur de la deuxième céramique, puis transformer le polymère en la deuxième céramique la température étant alors généralement de 600°C à 1600°C, de préférence de 1000°C à 1200°C.

Lors de l'étape d) du procédé, on élimine le matériau porogène réfractaire par décomposition, par une attaque chimique, moyennant quoi on obtient une pièce comprenant les particules de la première céramique, la deuxième céramique poreuse et/ou sous forme d'amas et une porosité interne, de type ouverte, entre lesdites particules.

Autrement dit, lors de cette étape, on élimine le matériau porogène pour ne garder que la première céramique, telle que du SiC, correspondant à la poudre initiale, et la deuxième céramique, telle que du SiC, issue du polymère précéramique, et on crée les chemins d'accès pour l'infiltration chimique de l'étape suivante.

Avantageusement, lors de l'étape d), l'attaque chimique peut être effectuée avec une solution d'un acide, de préférence d'un acide minéral, tel que l'acide chlorhydrique. De préférence, il s'agit d'une solution concentrée d'un acide, par exemple une solution d'acide chlorhydrique à 37%.

L'attaque, par exemple avec une solution d'un acide peut être effectuée à chaud, par exemple à une température de 50°C à 70°C.

A l'issue de cette étape d), la pièce peut être lavée, par exemple à l'eau, puis séchée.

On procède ensuite, lors de l'étape e) du procédé selon l'invention, au traitement de la pièce obtenue à l'issue de l'étape d) par une technique d'infiltration chimique en phase gazeuse (« CVI ») afin de déposer la troisième céramique dans la porosité interne de la pièce.

Les conditions de la technique d'infiltration en phase gazeuse -notamment température, pression, mélange de gaz utilisés, proportion des gaz dans le mélange de gaz, précurseur de la céramique, durée- permettant de déposer la troisième céramique dans la porosité interne de la pièce peuvent être facilement déterminées par l'homme du métier dans ce domaine de la technique.

Ainsi les conditions d'infiltration peuvent être les suivantes lorsque la troisième céramique est le SiC :
- Température : 900°C à 1300°C ;
- Pression : 1 kPa à30 kPa ;
- Précurseur(s) du SiC : CH₃SiCl₃ ou mélange de SiHCl₃ et de CH₄;
- Mélange de gaz utilisé : Hydrogène et précurseur du SiC ;
- Rapport des débits gazeux [H₂]/ [Précurseur du SiC tel que CH₃SiCl₃] : 1 à 20 ;
- Durée : 5 h à 150 h.

Des exemples des conditions d'infiltration peuvent être les suivants lorsque la troisième céramique est le SiC :
- Température environ 1050°C, pression 10 kPa, rapport des débits gazeux [H₂]/ [CH₃SiCl₃] = 5, durée 24 h ; ou bien
- Température 950°C, pression 4 kPa, rapport des débits gazeux [[H₂]/ [CH₃SiCl₃] = 4, durée 40 h.

A l'issue de l'étape e), on effectue, éventuellement, lors de l'étape f) éventuelle du procédé selon l'invention, le dépôt de la troisième céramique sur la surface externe de la pièce obtenue à l'issue de l'étape e) par une technique de dépôt chimique en phase gazeuse (« CVD »).

Les conditions de la technique de dépôt chimique en phase gazeuse (« CVD ») -notamment température, pression, mélange de gaz utilisés, proportion des gaz dans le mélange de gaz, précurseur de la céramique, durée- permettant de déposer la troisième céramique sur la surface externe de la pièce obtenue à l'issue de l'étape e) peuvent être facilement déterminées par l'homme du métier dans ce domaine de la technique. Les mêmes conditions que celles utilisées dans la technique d'infiltration chimique en phase gazeuse (« CVI ») peuvent être employées dans la technique de dépôt chimique en phase gazeuse (« CVD »), ou bien la pression, les débits et la température peuvent être augmentés, afin d'augmenter la vitesse de dépôt.

La pièce comprenant, de préférence constituée par, le matériau selon l'invention peut trouver son application dans de nombreux domaines, en raison des propriétés de conductivité thermiques, des propriétés mécaniques, électriques (semi-conducteur), du caractère réfractaire, de l'inertie chimique, et du comportement neutronique du matériau selon l'invention, notamment lorsque la première, et la troisième céramique ou de préférence, les trois céramiques sont du SiC.

Ces domaines sont, entre autres, les domaines des semi-conducteurs, de la chimie, de l'industrie aéronautique, de l'industrie spatiale, et de l'industrie nucléaire.

Par exemple, la pièce comprenant, de préférence constituée par le matériau selon l'invention peut constituer tout ou partie d'un échangeur thermique, d'un support de catalyseurs, d'un filtre opérant en atmosphère corrosive (par exemple pour la filtration de sous-produits gazeux de conteneurs contenant des composés radioactifs) et/ou à haute température, d'une pièce de four ou d'un four, d'une résistance chauffante, d'une chambre de combustion, d'une varistance, d'un substrat pour des composants de puissance, d'un blindage, d'un composant de roulement, ou d'un revêtement abrasif.

### BRÈVE DESCRIPTION DES DESSINS

- La Figure 1 montre la pièce crue, verte, à structure treillis préparée dans l'exemple 1.
- La Figure 2 montre le modèle numérique de la structure treillis de la Figure 1. Ce modèle numérique a été créé avec un logiciel de CAO.
- La Figure 3 montre la pièce finale en SiC obtenue dans l'exemple 1.
- La Figure 4 est une photographie prise en microscopie optique qui montre la microstructure du matériau constituant la pièce obtenue après l'étape d'acidage dans l'exemple 1.
   L'échelle portée sur la Figure 4 représente 20 µm.
- La Figure 5 est une photographie prise en microscopie optique à balayage (MEB) qui montre la microstructure du matériau constituant la pièce obtenue après l'étape d'acidage dans l'exemple 1.
   L'échelle portée sur la Figure 5 représente 10 µm.
- La Figure 6 est une photographie prise en microscopie optique qui montre la microstructure du matériau constituant la pièce finale obtenue dans l'exemple 1.
   L'échelle portée sur la Figure 6 représente 20 µm.
- La Figure 7 est une photographie prise en microscopie optique à balayage (MEB) qui montre la microstructure du matériau constituant la pièce finale obtenue dans l'exemple 1.
   L'échelle portée sur la Figure 7 représente 10 µm.

### EXPOSÉ DÉTAILLÉ DE MODES DE RÉALISATION PARTICULIERS

L'invention va maintenant être décrite en référence aux exemples suivants, donnés à titre illustratif et non limitatif.

### Exemple 1.

Réalisation d'une pièce à structure treillis en SiC, mise en forme par fabrication additive.

Dans cet exemple, on fabrique par le procédé selon l'invention, une pièce à structure treillis en SiC, qui est mise en forme par fabrication additive.

On prépare tout d'abord un mélange d'une poudre de plâtre et d'une poudre de SiC.

De la poudre de SiC est mélangée avec de la poudre de plâtre, dans les proportions de 70% en masse de SiC, et de 30% masse de plâtre.

La poudre de SiC est disponible auprès de la société Sigma Aldrich^{®}, sous la référence 357391, elle a une granulométrie de 400 mesh.

La poudre de plâtre est disponible auprès de la société 3D System^{®}, sous la référence ZP^{®} 151. Il s'agit en fait selon la fiche technique d'un « *High Performance Composite* » c'est-à-dire de plâtre avec un peu d'additifs.

Le mélange est effectué par voie sèche, dans un flacon en plastique de 1 L, agité à l'aide d'un mélangeur de poudres dit « *turbulat* » disponible auprès de la société Bioengineering^{®} de puissance 80 W. Le mélange est effectué à 20 tours/min.

Une pièce « crue » « verte » (« *green* ») à structure treillis est imprimée par fabrication additive, à l'aide d'une imprimante Z-Printer^{®} 310 disponible auprès de la société Z Corporation^{®}.

On utilise, pour imprimer cette pièce à structure treillis, le mélange de poudre préparé précédemment, mis en suspension dans le liant incolore Pro-1^{®} disponible auprès de la société 3D Systems^{®}, dans la tête d'impression de l'imprimante.

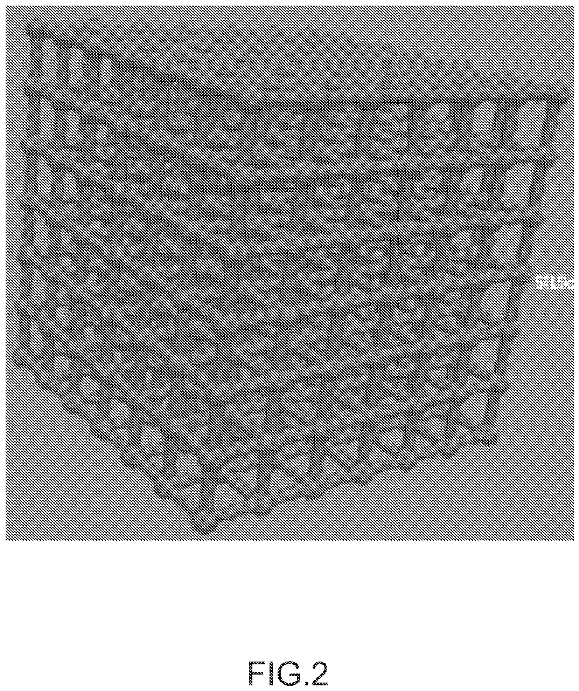

Le modèle numérique de la structure treillis est représenté sur la Figure 2, il a été créé avec un logiciel de CAO.

L'impression est réalisée avec des paramètres standards d'impression à savoir avec une épaisseur de couche de 100 microns, une vitesse d'impression de 20 mm/h suivant l'axe z (c'est-à-dire l'axe vertical par rapport au plateau de construction). La pièce est récupérée après séchage à 120°C à l'étuve.

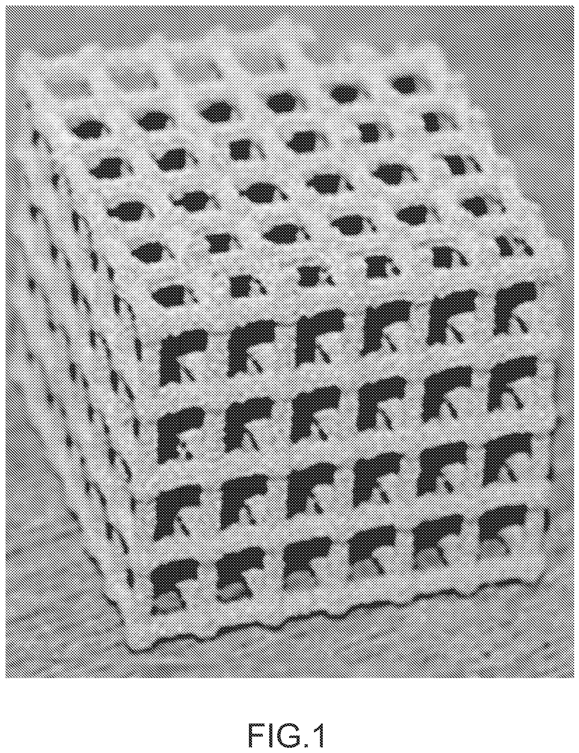

La Figure 1 montre la pièce crue, verte, à structure treillis obtenue. Cette pièce est constituée d'un mélange de plâtre, de SiC et de liant.

Le treillis possède des ligaments de 1,3 mm de diamètre, la dimension des cellules est de 5 mm x 5 mm x 5 mm, et le nombre de cellules est de 216 (6x6x6).

La pièce crue, verte, est ensuite placée sur un support, et elle est plongée dans un mélange de 65% en masse de polycarbosilane (composé disponible auprès de la société Starfire Systems^{®} sous la dénomination StarPCS ^{™} SMP-10) et de 35% en masse de toluène, dans une enceinte sous dépression.

La pièce est ensuite retirée de l'enceinte et séchée dans une étuve à 250°C, puis traitée à 1000°C pendant 1 h sous gaz neutre.

La pièce obtenue est constituée à 45% en masse de SiC issu du polymère polycarbosilane.

La pièce est ensuite placée dans une solution d'acide chlorhydrique concentré (37%), à 60°C, pendant 2 heures, afin d'éliminer le plâtre par décomposition et dissolution. Cette étape est appelée étape d'acidage.

La pièce est ensuite lavée à l'eau puis séchée.

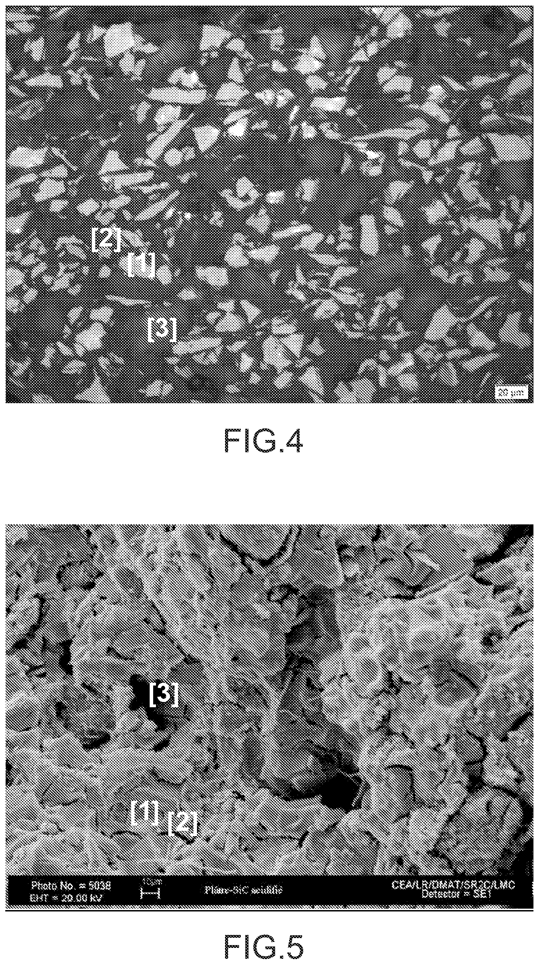

- La Figure 4 est une photographie prise en microscopie optique qui montre la microstructure du matériau constituant la pièce obtenue après l'étape d'acidage, le lavage à l"eau, et le séchage.
- La Figure 5 est une photographie prise en microscopie optique à balayage (MEB) qui montre la microstructure du matériau constituant la pièce obtenue après l'étape d'acidage, le lavage à l"eau, et le séchage.

On distingue sur les Figures 4 et 5 :
[1] des grains de SiC ;
[2] du SiC amorphe issu du polymère ;
[3] une porosité.

Enfin, la pièce est placée dans un four de CVI avec les conditions d'infiltration suivantes : température environ 1050°C, pression 10 kPa, rapport des débits gazeux [H₂]/ [CH₃SiCl₃] = 5, durée 24 h.

Après la densification, la pièce est constituée de 17% en masse de SiC issu du polymère, de 21% en masse de SiC particulaire et de 62% en masse de SiC déposé par CVI. La masse volumique moyenne des ligaments est de 2,5 g/cm³.

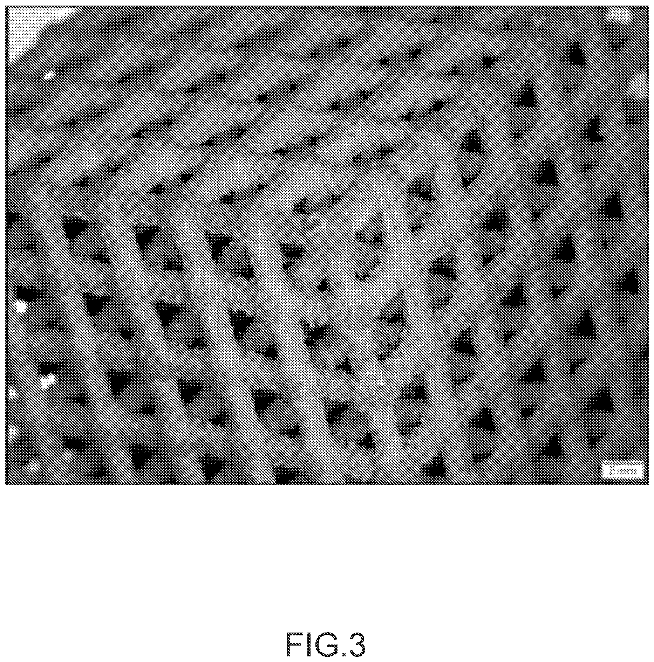

La Figure 3 montre la pièce finale en SiC obtenue dans cet exemple.

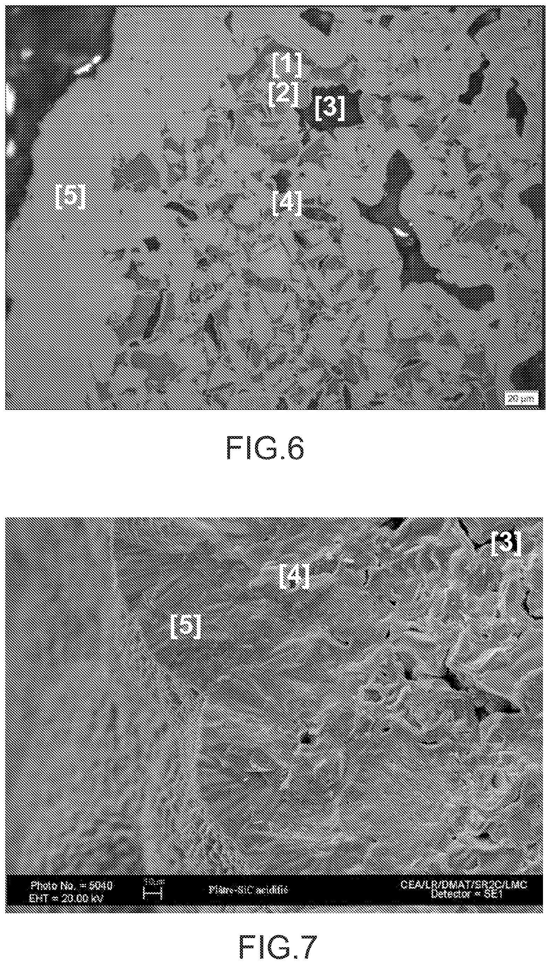

- La Figure 6 est une photographie prise en microscopie optique qui montre la microstructure du matériau final constituant la pièce obtenue.
- La Figure 7 est une photographie prise en microscopie optique à balayage (MEB) qui montre la microstructure du matériau final constituant la pièce obtenue.

On distingue sur les Figures 6 et 7 :
[1] des grains de SiC ;
[2] du SiC amorphe issu du polymère ;
[3] une porosité ;
[4] du SiC déposé par « CVI » ;
[5] du SiC déposé par CVD.

### Exemple 2.

### Réalisation d'une plaque en MoSi₂-SiC.

Dans cet exemple, on fabrique, par le procédé selon l'invention, une plaque en MoSi₂-SiC.

On procède de la même manière que dans l'exemple 1, mais avec les différences suivantes :
- une poudre de base de MoSi₂, disponible auprès de la société H.C. Starck sous la dénomination Amperit^{®} 920-054 (granulométrie 15-45 microns), au lieu d'une poudre SiC, est mélangée avec la poudre de plâtre, dans les proportions massiques de 80% MoSi₂ et de 20% plâtre.
- une plaque de 10 cm x 2 cm x 3 mm est obtenue par mélange de la poudre précédente avec une solution de 65% de polycarbosilane et 35% de toluène (% en masse), puis coulage dans un moule.
- la pièce est ensuite placée dans un four de CVI avec les conditions d'infiltration suivantes : température 950°C, pression 4 kPa, rapport des débits gazeux [[H₂]/ [CH₃SiCl₃] = 4, durée 40 h.

Les autres étapes, imprégnation, pyrolyse, traitements thermiques et élimination du plâtre sont réalisées dans les mêmes conditions que dans l'exemple 1.

La pièce obtenue est constituée, en masse, de 78% de MoSi₂, de 17% de SiC obtenu par CVI, et de 5% de SiC issu du polymère.

Elle possède une masse volumique de 4,4 g/cm³.

### REFERENCES

[1] *"*UHT Ceramics: densification, properties and thermal stability", J.F. Justin, Journal Aerospace Lab, Issue 3, p 1-11, Nov 2011.
[2] *"*Ultrahigh temperature ceramic-based composites", Y. Kawaga, p 273-292, in Ceramic Matrix Composites, Wiley and Sons, 2015.
[3] *"*Sintering additives for SiC based on the reactivity: a review", K. Raju, Ceramics International 42, p 17947-17962, 2016.
[4] *"*Volumetric receivers in Solar Thermal Power Plants with Central Receiver System technology: A review", A. Avila Marin, Solar Energy, vol. 85, pp. 891-910, 2011.
[5] *"*Pressureless sintering of HfB2-SiC ceramics", D.W Ni, Journal of the European Ceramic Society 32 (2012) 3627-3635.
[6] *"*Additive-free hot-presssed SiC ceramics - A material with exceptional mechanical properties", P. Sagjgalik, Journal of European Ceramic Society 36, 1333-1341, 2016.
[7] *"Procédé de fabrication de matériau composite à matrice carbure",* S. Jacques, FR-A1-3 004 712, du 19.04.13.
[8] *"*Polymer-Derived Ceramics : 40 years ofresearch and innovation in Advanced Ceramics", P. Colombo, J. Am. Ceram. Soc., 93, [7], 1805-1837, 2010.
[9] *"*C/SiC and C/C-SiC composites", B. Heidenreich, p 147-216, in Ceramic Matrix Composites, Wiley and Sons, 2015.
[10] *"Chemical vapor deposited silicon carbides articles",* Lais Kevin D., brevet, EP 1 970 358 A1 du 17/09/2008.
[11] *"*Manufacturing SiC-fiber-reinforced SiC matrix composites by improved CVI/slurry/Infiltration/Polymer impregnation and pyrolysis", C.A Nannetti, J. Am. Ceram. Soc. 87 [7] 1205-1209, 2004.
[12] JP-A-2003-238249.
[13] US-A1-2003/162647.

## Revendications

1. Matériau céramique composite particulaire, comprenant, de préférence constitué par :
- des particules en au moins une première céramique ultraréfractaire « UHTC » sous forme cristallisée, la surface externe de ces particules étant recouverte au moins en partie par une couche poreuse en au moins une deuxième céramique ultraréfractaire sous forme amorphe, ladite première céramique ultraréfractaire « UHTC » sous forme cristallisée représentant de 25% à 90% en masse par rapport à la masse du matériau et ladite deuxième céramique ultraréfractaire sous forme amorphe représentant de 2% à 15% en masse par rapport à la masse totale du matériau; et les particules définissant entre elles un espace;
- éventuellement, des amas poreux de ladite au moins une deuxième céramique ultraréfractaire sous forme amorphe, répartis dans ledit espace ;
- une matrice dense en au moins une troisième céramique ultraréfractaire sous forme cristallisée remplissant au moins en partie ledit espace ;
- éventuellement, un revêtement dense en au moins ladite troisième céramique ultraréfractaire sous forme cristallisée, recouvrant la surface externe de ladite matrice, ladite matrice et ledit revêtement représentant de 5% à 90% en masse par rapport à la masse totale du matériau ; la porosité de ladite couche poreuse en au moins une deuxième céramique ultraréfractaire sous forme amorphe étant de 15% à 30%.

2. Matériau selon la revendication 1, qui présente une porosité globale supérieure ou égale à 5%, de préférence de 5% à 50%, de préférence encore de 5% à 30%, mieux de 10% à 20%.

3. Matériau selon la revendication 1 ou 2, dans lequel la couche poreuse en au moins une deuxième céramique ultraréfractaire sous forme amorphe a une épaisseur de 1000 à 10000 nm (1 à 10 microns).

4. Matériau selon l'une quelconque des revendications précédentes, dans lequel lesdites première, deuxième et troisième céramiques sont choisies parmi les céramiques borures, les céramiques carbures, les céramiques nitrures, les céramiques siliciures, le carbone, et leurs mélanges; de préférence, lesdites première, deuxième et troisième céramiques sont choisies parmi le SiC, le MoSi₂, le TiC, le TaC, le ZrC, le ZrB₂, le HfC, le HfB₂, le BN, l'AIN, le TiN, le carbone, et leurs mélanges.

5. Matériau selon l'une quelconque des revendications précédentes, dans lequel lesdites première, deuxième et troisième céramiques sont identiques; de préférence, lesdites première, deuxième et troisième céramiques sont du SiC.

6. Matériau selon la revendication 5, dans lequel la première céramique ultraréfractaire est du SiC sous forme cristallisée a, la deuxième céramique est du SiC poreux amorphe, et la troisième céramique est du SiC sous forme cristallisée β.

7. Pièce comprenant, de préférence constituée par, le matériau céramique composite particulaire selon l'une quelconque des revendications 1 à 6.

8. Pièce selon la revendication 7, qui constitue tout ou partie d'un échangeur thermique, d'un support de catalyseurs, d'un filtre opérant en atmosphère corrosive et/ou à haute température, d'une pièce de four ou d'un four, d'une résistance chauffante, d'une chambre de combustion, d'une varistance, d'un substrat pour des composants de puissance, d'un blindage, d'un composant de roulement, ou d'un revêtement abrasif.

9. Procédé de fabrication d'une pièce en un matériau céramique composite particulaire selon la revendication 7 ou 8, comprenant les étapes successives suivantes :
a) on prépare une pièce, dite pièce crue ou verte (« *green* »), comprenant un mélange d'une poudre de particules de la première céramique et d'une poudre de particules d'un matériau porogène réfractaire susceptible d'être éliminé par une attaque chimique, un polymère précurseur de la deuxième céramique, et un solvant dudit polymère ;
b) on évapore le solvant et on réticule le polymère précurseur de la deuxième céramique;
c) on effectue un traitement thermique pour transformer le polymère en la deuxième céramique, qui se présente sous la forme d'une couche poreuse qui recouvre au moins en partie la surface externe des particules de la première céramique, et éventuellement d'amas poreux;
d) on élimine le matériau porogène réfractaire par une attaque chimique, moyennant quoi on obtient une pièce comprenant les particules de la première céramique, la deuxième céramique poreuse qui se présente sous la forme d'une couche poreuse qui recouvre au moins en partie la surface externe de ces particules et éventuellement d'amas poreux, et une porosité interne entre lesdites particules;
e) traitement de la pièce obtenue à l'issue de l'étape d) par une technique d'infiltration chimique en phase gazeuse (« CVI ») afin de déposer la troisième céramique dans la porosité interne de la pièce ;
f) éventuellement, dépôt de la troisième céramique sur la surface externe de la pièce obtenue à l'issue de l'étape e) par une technique de dépôt chimique en phase gazeuse (« CVD »).

10. Procédé selon la revendication 9, dans lequel l'étape a) au cours de laquelle on prépare une pièce crue ou verte comprend une étape de préparation du mélange d'une poudre de particules de la première céramique et d'une poudre de particules du matériau porogène réfractaire susceptible d'être éliminé par une attaque chimique ; et une étape de mise en forme du mélange d'une poudre de particules de la première céramique et d'une poudre de particules du matériau porogène réfractaire susceptible d'être éliminé par une attaque chimique, sous la forme de la pièce crue ou verte.

11. Procédé selon la revendication 9 ou 10, dans lequel le matériau porogène réfractaire est choisi parmi les matériaux capables de supporter une température supérieure à 300°C, de préférence supérieure à 400°C, de préférence encore supérieure à 600°C, mieux supérieure à 800°C, mieux encore supérieure à 1000°C ; de préférence, le matériau porogène réfractaire est choisi parmi le plâtre, le carbonate de potassium, le carbonate de calcium, et le sulfate de potassium (K₂SO₄).

12. Procédé selon l'une quelconque des revendications 9 à 11, dans lequel la préparation du mélange de la poudre de particules de la première céramique, et de la poudre de particules du matériau porogène réfractaire susceptible d'être éliminé par une attaque chimique est réalisé par voie sèche ou par voie humide.

13. Procédé selon l'une quelconque des revendications 9 à 12, dans lequel la mise en forme du mélange d'une poudre de particules de la première céramique, et d'une poudre de particules du matériau porogène réfractaire susceptible d'être éliminé par une attaque chimique est réalisée par moulage, par coulage en barbotine, avec un filtre-presse, ou par une technique de fabrication additive, par exemple une technique de projection de liant sur un lit de poudre.

14. Procédé selon l'une quelconque des revendications 9 à 13, dans lequel le polymère précurseur de la deuxième céramique, généralement dilué dans un solvant, est ajouté lors de l' étape de préparation du mélange d'une poudre de particules de la première céramique, et d'une poudre de particules du matériau porogène réfractaire susceptible d'être éliminé par une attaque chimique ; ou lors de l'étape de mise en forme du mélange d'une poudre de particules de la première céramique, et d'une poudre de particules du matériau porogène réfractaire susceptible d'être éliminé par une attaque chimique ; ou après l'étape de mise en forme du mélange d'une poudre de particules de la première céramique et d'une poudre de particules du matériau porogène réfractaire susceptible d'être éliminé par une attaque chimique, sous la forme d'une pièce crue ou verte ; de préférence, le polymère précurseur de la deuxième céramique est ajouté par trempage de la pièce crue ou verte dans une solution du polymère, de préférence encore sous dépression.

15. Procédé selon l'une quelconque des revendications 9 à 14, dans lequel le polymère précurseur aussi appelé polymère précéramique, de la deuxième céramique est choisi parmi les polycarbosilanes, les polysilazanes, les polyborosilanes et leurs mélanges.

16. Procédé selon l'une quelconque des revendications 9 à 15, dans lequel les étapes b) et c) sont regroupées.

17. Procédé selon l'une quelconque des revendications 9 à 16, dans lequel lors de l'étape c) le traitement thermique est réalisé à une température de 600°C à 1600°C, de préférence de 800°C à 1500°C, de préférence encore de 1000°C à 1200°C.

18. Procédé selon l'une quelconque des revendications 9 à 17, dans lequel, lors de l'étape d), l'attaque chimique est effectuée avec une solution d'un acide, de préférence d'un acide minéral, tel que l'acide chlorhydrique.

## Patentansprüche

1. Teilchenförmiges keramisches Verbundmaterial, enthaltend, vorzugsweise bestehend aus:
- Teilchen aus zumindest einer ersten ultrahochfesten Keramik "UHTC" in kristallisierter Form, wobei die Außenfläche dieser Teilchen zumindest teilweise von einer porösen Schicht aus zumindest einer zweiten ultrahochfesten Keramik in amorpher Form bedeckt ist, wobei die erste ultrahochfeste Keramik "UHTC" in kristallisierter Form 25 bis 90 Masse-% der Masse des Materials ausmacht und die zweite ultrahochfeste Keramik in amorpher Form 2 bis 15 Masse-% der Gesamtmasse des Materials ausmacht; und wobei die Teilchen zwischen sich einen Raum definieren;
- gegebenenfalls porösen Clustern der zumindest einen zweiten ultrahochfesten Keramik in amorpher Form, die in dem Raum verteilt sind ;
- einer dichten Matrix aus zumindest einer dritten ultrahochfesten Keramik in kristallisierter Form, die den Raum zumindest teilweise ausfüllt;
- gegebenenfalls einer dichten Beschichtung aus zumindest der dritten ultrahochfesten Keramik in kristallisierter Form, die die Außenfläche der Matrix bedeckt, wobei die Matrix und die Beschichtung 5 bis 90 Masse-% der Gesamtmasse des Materials ausmachen; wobei die Porosität der porösen Schicht aus zumindest einer zweiten ultrahochfesten Keramik in amorpher Form 15 % bis 30 % beträgt.

2. Material nach Anspruch 1, das eine Gesamtporosität größer oder gleich 5 %, vorzugsweise von 5% bis 50%, weiter bevorzugt von 5% bis 30%, besonders bevorzugt von 10% bis 20%, aufweist.

3. Material nach Anspruch 1 oder 2, wobei die poröse Schicht aus zumindest einer zweiten ultrahochfesten Keramik in amorpher Form eine Dicke von 1.000 bis 10.000 nm (1 bis 10 Mikron) aufweist.

4. Material nach einem der vorhergehenden Ansprüche, wobei die erste, zweite und dritte Keramik ausgewählt sind aus Boridkeramiken, Karbidkeramiken, Nitridkeramiken, Silizidkeramiken, Kohlenstoff und deren Gemischen; wobei vorzugsweise die erste, zweite und dritte Keramik ausgewählt sind aus SiC, MoSi₂, TiC, TaC, ZrC, ZrB₂, HfC, HfB₂, BN, AIN, TiN, Kohlenstoff und deren Gemischen.

5. Material nach einem der vorhergehenden Ansprüche, wobei die erste, zweite und dritte Keramik identisch sind; wobei vorzugsweise die erste, zweite und dritte Keramik SiC sind.

6. Material nach Anspruch 5, wobei die erste ultrahochfeste Keramik SiC in kristallisierter Form α ist, die zweite Keramik amorphes poröses SiC ist und die dritte Keramik SiC in kristallisierter Form β ist.

7. Teil, enthaltend, vorzugsweise bestehend aus dem teilchenförmigen keramischen Verbundmaterial nach einem der Ansprüche 1 bis 6.

8. Teil nach Anspruch 7, das ganz oder teilweise einen Wärmetauscher, einen Katalysatorträger, einen Filter, der in korrosiver Atmosphäre und/oder bei hohen Temperaturen betrieben wird, ein Ofenbauteil oder einen Ofen, einen Heizwiderstand, eine Brennkammer, einen Varistor, ein Substrat für Leistungskomponenten, eine Abschirmung, eine Lagerkomponente oder einen Schleifbelag bildet.

9. Verfahren zur Herstellung eines Teils aus einem teilchenförmigen keramischen Verbundmaterial nach Anspruch 7 oder 8, umfassend die nachstehenden aufeinanderfolgenden Schritte:
a) Herstellen eines Teils, Roh- oder Grünling ("green") genannt, das ein Gemisch aus einem Pulver aus Teilchen der ersten Keramik und einem Pulver aus Teilchen eines feuerfesten porogenen Materials, das durch chemisches Ätzen entfernbar ist, ein Vorläuferpolymer der zweiten Keramik und ein Lösungsmittel für das Polymer enthält;
b) Verdampfen des Lösungsmittels und Vernetzen des Vorläuferpolymers der zweiten Keramik;
c) Durchführen einer Wärmebehandlung, um das Polymer in die zweite Keramik umzuwandeln, die in Form einer porösen Schicht, die zumindest teilweise die Außenfläche der Teilchen der ersten Keramik bedeckt, und gegebenenfalls in Form von porösen Clustern vorliegt;
d) Entfernen des feuerfesten porogenen Materials durch chemisches Ätzen, wodurch ein Teil erhalten wird, das die Teilchen der ersten Keramik, die poröse zweite Keramik, die in Form einer zumindest teilweise die Außenfläche dieser Teilchen bedeckenden porösen Schicht und gegebenenfalls in Form von porösen Clustern vorliegt, enthält, sowie eine innere Porosität zwischen den Teilchen;
e) Behandeln des nach Schritt d) erhaltenen Teils mit einer chemischen Gasphaseninfiltrationstechnik ("CVI"), um die dritte Keramik in der inneren Porosität des Teils abzuscheiden;
f) gegebenenfalls Abscheiden der dritten Keramik auf der Außenfläche des nach Schritt e) erhaltenen Teils durch eine Technik der chemischen Gasphasenabscheidung ("CVD").

10. Verfahren nach Anspruch 9, wobei Schritt a), bei dem ein Roh- oder Grünling hergestellt wird, einen Schritt des Herstellens des Gemischs aus einem Pulver aus Teilchen der ersten Keramik und einem Pulver aus Teilchen des porogenen feuerfesten Materials, das durch chemisches Ätzen entfernbar ist; und einen Schritt des Formens des Gemischs aus einem Pulver aus Teilchen der ersten Keramik und einem Pulver aus Teilchen des porogenen feuerfesten Materials, das durch chemisches Ätzen entfernbar ist, in Form des Roh- oder Grünlings umfasst.

11. Verfahren nach Anspruch 9 oder 10, wobei das feuerfeste porogene Material aus Materialien ausgewählt ist, die einer Temperatur von mehr als 300 °C, vorzugsweise mehr als 400 °C, noch bevorzugter mehr als 600 °C, besser mehr als 800 °C, noch besser mehr als 1000 °C standhalten können; wobei vorzugsweise das feuerfeste porogene Material ausgewählt ist aus Gips, Kaliumcarbonat, Calciumcarbonat und Kaliumsulfat (K₂SO₄).

12. Verfahren nach einem der Ansprüche 9 bis 11, wobei das Herstellen des Gemischs aus dem Pulver aus Teilchen der ersten Keramik und dem Pulver aus Teilchen des porogenen feuerfesten Materials, das durch chemisches Ätzen entfernbar ist, trocken oder nass erfolgt.

13. Verfahren nach einem der Ansprüche 9 bis 12, wobei das Formen des Gemischs aus einem Pulver aus Teilchen der ersten Keramik und einem Pulver aus Teilchen des feuerfesten porogenen Materials, das durch chemisches Ätzen entfernbar ist, durch Formgießen, Schlickerguss, mit einer Filterpresse oder durch eine additive Fertigungstechnik, beispielsweise eine Technik, bei der ein Bindemittel auf ein Pulverbett gespritzt wird, durchgeführt wird.

14. Verfahren nach einem der Ansprüche 9 bis 13, wobei das Vorläuferpolymer der zweiten Keramik, das im Allgemeinen in einem Lösungsmittel verdünnt ist, im Schritt des Herstellens des Gemischs aus einem Pulver aus Teilchen der ersten Keramik und einem Pulver aus Teilchen des feuerfesten porogenen Materials, das durch chemisches Ätzen entfernbar ist; oder im Schritt des Formens des Gemischs aus einem Pulver aus Teilchen der ersten Keramik und einem Pulver aus Teilchen des feuerfesten porogenen Materials, das durch chemisches Ätzen entfernbar ist; oder nach dem Schritt des Formens des Gemischs aus einem Pulver aus Teilchen der ersten Keramik und einem Pulver aus Teilchen des feuerfesten porogenen Materials, das durch chemisches Ätzen entfernbar ist, in Form eines Roh- oder Grünlings, zugegeben wird; wobei vorzugsweise das Vorläuferpolymer der zweiten Keramik durch Eintauchen des Roh- oder Grünlings in einer Lösung des Polymers, vorzugsweise unter Unterdruck, zugegeben wird.

15. Verfahren nach einem der Ansprüche 9 bis 14, wobei das Vorläuferpolymer der zweiten Keramik, auch präkeramisches Polymer genannt, ausgewählt ist aus Polycarbosilanen, Polysilazanen, Polyborosilanen und deren Gemischen.

16. Verfahren nach einem der Ansprüche 9 bis 15, wobei die Schritte b) und c) zusammengefasst werden.

17. Verfahren nach einem der Ansprüche 9 bis 16, wobei in Schritt c) die Wärmebehandlung bei einer Temperatur von 600°C bis 1.600°C, vorzugsweise von 800°C bis 1.500°C, besonders bevorzugt von 1.000°C bis 1.200°C, durchgeführt wird.

18. Verfahren nach einem der Ansprüche 9 bis 17, wobei in Schritt d) das chemisches Ätzen mit einer Lösung einer Säure, vorzugsweise einer Mineralsäure, wie etwa Salzsäure, durchgeführt wird.

## Claims

1. Particulate composite ceramic material, comprising, preferably consisting of:
- particles made of at least one first ultra-high-temperature ceramic (UHTC) in crystallised form, the outer surface of said particles being at least partially covered by a porous layer made of at least one second ultra-high-temperature ceramic in amorphous form, said first ultra-high-temperature ceramic (UHTC) in crystallised form representing 25% to 90% by mass with respect to the mass of the material and said second ultra-high-temperature ceramic in amorphous form representing 2% to 15% by mass with respect to the total mass of the material; and the particles defining a space therebetween;
- optionally, porous clusters of said at least one second ultra-high-temperature ceramic in amorphous form, distributed in said space;
- a dense matrix made of at least one third ultra-high-temperature ceramic in crystallised form at least partially filling said space;
- optionally, a dense coating made of at least said third ultra-high-temperature ceramic in crystallised form, covering the outer surface of said matrix, said matrix and said coating representing 5% to 90% by mass with respect to the total mass of the material; the porosity of said porous layer made of at least one second ultra-high-temperature ceramic in amorphous form being 15% to 30%.

2. Material according to claim 1, which has an overall porosity greater than or equal to 5%, preferably 5% to 50%, more preferably 5% to 30%, better 10% to 20%.

3. Material according to claim 1 or 2, wherein the porous layer made of at least one second ultra-high-temperature ceramic in amorphous form has a thickness of 1000 to 10000 nm (1 to 10 microns).

4. Material according to any one of the preceding claims, wherein said first, second and third ceramics are selected from boride ceramics, carbide ceramics, nitride ceramics, silicide ceramics, carbon, and the mixtures thereof; preferably,
said first, second and third ceramics are selected from SiC, MoSi₂, TiC, TaC, ZrC, ZrB₂, HfC, HfB₂, BN, AIN, TiN, carbon, and the mixtures thereof.

5. Material according to any one of the preceding claims, wherein said first, second and third ceramics are identical; preferably, said first, second and third ceramics are SiC.

6. Material according to claim 5, wherein the first ultra-high-temperature ceramic is SiC in α crystallised form, the second ceramic is amorphous porous SiC, and the third ceramic is SiC in β crystallised form.

7. Part comprising, preferably consisting of, the particulate composite ceramic material according to any one of claims 1 to 6.

8. Part according to claim 7, which constitutes all or part of a heat exchanger, of a catalysts support, of a filter operating in a corrosive atmosphere and/or at a high temperature, of a furnace part or of a furnace, of a heating resistor, of a combustion chamber, of a varistor, of a substrate for power components, of a shielding, of a rolling component, or of an abrasive coating.

9. Method for manufacturing a part made of a particulate composite ceramic material according to claim 7 or 8, comprising the following successive steps:
a) a part is prepared, so called raw or green part, comprising a mixture of a powder of particles of the first ceramic and of a powder of particles of a refractory pore-forming material capable of being eliminated by a chemical attack, a precursor polymer of the second ceramic, and a solvent of said polymer;
b) the solvent is evaporated and the precursor polymer of the second ceramic is crosslinked;
c) a heat treatment is performed to transform the polymer into the second ceramic, which is in the form of a porous layer that at least partially covers the outer surface of the particles of the first ceramic, and optionally of porous clusters;
d) the refractory pore-forming material is eliminated by a chemical attack, whereby a part is obtained comprising the particles of the first ceramic, the second porous ceramic that is in the form of a porous layer that at least partially covers the outer surface of said particles and optionally of porous clusters, and an internal porosity between said pa rticles;
e) treatment of the part obtained at the end of step d) by a chemical vapour infiltration (CVI) technique in order to deposit the third ceramic in the internal porosity of the part;
f) optionally, deposition of the third ceramic on the outer surface of the part obtained at the end of step e) by a chemical vapour deposition (CVD) technique.

10. Method according to claim 9, wherein step a) during which a raw or green part is prepared comprises a step of preparing the mixture of a powder of particles of the first ceramic and of a powder of particles of the refractory pore-forming material capable of being eliminated by a chemical attack; and a step of forming, shaping the mixture of a powder of particles of the first ceramic, and of a powder of particles of the refractory pore-forming material capable of being eliminated by a chemical attack, in the form, shape, of the raw or green part.

11. Method according to claim 9 or 10, wherein the refractory pore-forming material is selected from the materials capable of withstanding a temperature greater than 300°C, preferably greater than 400°C, more preferably greater than 600°C, better greater than 800°C, even better greater than 1000°C; preferably,
the refractory pore-forming material is selected from plaster, potassium carbonate, calcium carbonate, and potassium sulphate (K₂SO₄).

12. Method according to any one of claims 9 to 11, wherein the preparation of the mixture of the powder of particles of the first ceramic, and of the powder of particles of the refractory pore-forming material capable of being eliminated by a chemical attack is carried out by a dry process or by a wet process.

13. Method according to any one of claims 9 to 12, wherein the forming, shaping of the mixture of a powder of particles of the first ceramic, and of a powder of particles of the refractory pore-forming material capable of being eliminated by a chemical attack is carried out by moulding, by slip casting, with a filter press, or by an additive manufacturing technique, for example a technique of projecting a binder on a bed of powder.

14. Method according to any one of claims 9 to 13, wherein the precursor polymer of the second ceramic, generally diluted in a solvent, is added during the step of preparing the mixture of a powder of particles of the first ceramic, and of a powder of particles of the refractory pore-forming material capable of being eliminated by a chemical attack; or during the step of forming, shaping the mixture of a powder of particles of the first ceramic, and of a powder of particles of the refractory pore-forming material capable of being eliminated by a chemical attack; or after the step of forming, shaping the mixture of a powder of particles of the first ceramic and of a powder of particles of the refractory pore-forming material capable of being eliminated by a chemical attack, in the form, shape of a raw or green part; preferably, the precursor polymer of the second ceramic is added by soaking the raw or green part in a solution of the polymer, still preferably under vacuum.

15. Method according to any one of claims 9 to 14, wherein the precursor polymer also called pre-ceramic polymer, of the second ceramic is selected from polycarbosilanes, polysilazanes, polyborosilanes and the mixtures thereof.

16. Method according to any one of claims 9 to 15, wherein steps b) and c) are grouped.

17. Method according to any one of claims 9 to 16, wherein during step c) the heat treatment is carried out at a temperature of 600°C to 1600°C, preferably of 800°C to 1500°C, more preferably of 1000°C to 1200°C.

18. Method according to any one of claims 9 to 17, wherein, during step d), the chemical attack is performed with a solution of an acid, preferably of a mineral acid, such as hydrochloric acid.
